(19) Europäisches Patentamt
European Patent Office
Office européen des brevets

(11) **EP 4 015 466 A1**

(12) **EUROPÄISCHE PATENTANMELDUNG**

(43) Veröffentlichungstag:
**22.06.2022 Patentblatt 2022/25**

(21) Anmeldenummer: 20214478.8

(22) Anmeldetag: **16.12.2020**

(51) Internationale Patentklassifikation (IPC):
**C03B 19/14** (2006.01) **C03B 20/00** (2006.01)

(52) Gemeinsame Patentklassifikation (CPC):
**C03B 19/1423;** C03B 2207/32; C03B 2207/62;
C03B 2207/70

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Heraeus Quarzglas GmbH & Co. KG 63450 Hanau (DE)**

(72) Erfinder:
- **Thürer, Martin 63450 Hanau (DE)**
- **Lehmann, Walter 63450 Hanau (DE)**
- **Trommer, Martin 63450 Hanau (DE)**

(74) Vertreter: **Gille Hrabal Partnerschaftsgesellschaft mbB Patentanwälte Brucknerstraße 20 40593 Düsseldorf (DE)**

(54) **VERFAHREN ZUR HERSTELLUNG VON SYNTHETISCHEM QUARZGLAS**

(57) Beschrieben wird ein Verfahren zur Herstellung von synthetischem Quarzglas, bei welchem sich die Abscheideoberfläche für einen Zeitraum von mindestens 50 % der Aufbauzeit des Sootkörpers in einem Brennerabstand befindet, in welchem die horizontal integrierte Leuchtintensität der Flamme des verwendeten Brenners im targetlosen Zustand noch mindestens 2/3 der maximalen horizontale integrierten Leuchtintensität der Flamme beträgt.

EP 4 015 466 A1

**Beschreibung**

Die vorliegende Erfindung betrifft ein Verfahren zur Herstellung von synthetischem Quarzglas sowie eine entsprechende Vorrichtung zur Durchführung des erfindungsgemäßen Verfahrens.

Zur Herstellung von synthetischem Quarzglas werden aus einer siliziumhaltigen Ausgangssubstanz in einem CVD-Verfahren durch Hydrolyse oder Oxidation $SiO_2$-Teilchen erzeugt und auf einem sich bewegenden Träger abgeschieden. Es kann dabei zwischen Außen- und Innenabscheideverfahren unterschieden werden. Bei Außenabscheideverfahren werden die $SiO_2$-Teilchen auf der Außenseite eines rotierenden Trägers aufgebracht. Als Beispiele für entsprechende Außenabscheideverfahren seien das so genannte OVD-Verfahren (Outside Vapour Phase Deposition), das VAD-Verfahren (Vapour Phase Axial Deposition) oder das PECVD-Verfahren (Plasma Enhanced Chemical Vapour Deposition) genannt. Als bekanntestes Beispiel für ein Innenabscheideverfahren steht das MCVD-Verfahren (Modified Chemical Vapour Deposition), bei dem auf der Innenwandung eines von außen erhitzten Rohres $SiO_2$-Teilchen abgeschieden werden.

Bei hinreichend hoher Temperatur im Bereich der Trägeroberfläche kommt es zu einem unmittelbaren Verglasen der $SiO_2$-Teilchen, was auch als "Direktverglasen" bekannt ist. Im Unterschied dazu ist beim so genannten "Sootverfahren" die Temperatur beim Abscheiden der $SiO_2$-Teilchen so niedrig, dass eine poröse $SiO_2$-Sootschicht erhalten wird, die dann in einem separaten Verfahrensschritt zu transparentem Quarzglas gesintert wird. Sowohl das Direktverglasen als auch das Sootverfahren führen zu einem dichten, transparenten, hochreinen, synthetischen Quarzglas.

In den Verfahren des Standes der Technik zur Herstellung von synthetischem Quarzglas wird in der Regel eine Verfahrensweise angewendet, um eine ausreichende Abscheideeffizienz der $SiO_2$-Teilchen zu gewährleisten, wobei unter Abscheideeffizienz der Quotient aus dem Gewicht des erzeugten Sootkörpers und der rechnerisch maximal erzeugbaren Gesamtmenge an $SiO_2$ unter der Annahme einer vollständigen Umsetzung des Siliziums aus der eingesetzten siliziumhaltigen Ausgangsverbindung verstanden wird. Zu diesen üblicherweise verwendeten Bedingungen zählt zunächst einmal ein möglichst stöchiometrisches Verhältnis von Sauerstoff zu Brennstoff (= siliziumhaltige Ausgangssubstanz plus dem brennbare Hilfsgase), damit eine im Wesentlichen vollständige Umsetzung zu dem gewünschtem Zielprodukt gewährleistet wird. Darüber hinaus bewirkt ein stöchiometrisches Verhältnis von Sauerstoff zu der siliziumhaltigen Ausgangssubstanz eine hohe Umsetzungstemperatur, was ebenfalls für die Effizienz des Verfahrens bevorzugt sein sollte. Das stöchiometrische Verhältnis von Brennstoff zu Luft wird auch als Luftzahl bezeichnet und sollte demnach bei eins liegen. Die Verbrennung der siliziumhaltigen Ausgangssubstanz erfolgt im Stand der Technik regelmäßig mit einer turbulenten Flamme, die für eine gute Durchmischung der einzelnen Gase (insbesondere Sauerstoff und siliziumhaltige Ausgangsverbindung) sorgt und gleichzeitig eine rasche Umsetzung zu dem gewünschten Siliziumdioxid bewirkt. Dabei wird eine Kohlenstoffrußbildung in der Flamme möglichst vermieden, um Kohlenstoffrußabscheidungen auf dem resultierenden Sootkörper zu vermeiden. Deshalb wird typischerweise der Sootkörper so positioniert, dass am Auftreffpunkt der Flamme kein gelbliches Kohlenstoffrußleuchten mehr erkennbar ist, welches ein Indiz für eine unvollständige Verbrennung und damit nicht umgesetzten OMCTS ist.

Ein entsprechendes Verfahren zur Herstellung von synthetischem Quarzglas ist beispielsweise in WO 90/10596 A beschrieben, wobei einhergehend mit den vorstehenden Erläuterungen mit einem Sauerstoffüberschuss und damit mit einer Luftzahl von größer 1 gearbeitet wird.

DE 101 02 611 A beschreibt ein Verfahren zur Herstellung von synthetischem Quarzglas, in welchem $SiO_2$-Teilchen in mehreren, in einer Reihe angeordneter Abscheidebrennern, denen jeweils eine Brennerflamme zugeordnet ist, gebildet und auf einer Ablagerungsfläche eines um seine Längsachse rotierenden Trägers abgeschieden werden. Der dabei angewendete Abstand des Brenners zu dem sich ausbildenden Sootkörper beträgt 160 bis 240 mm, wobei die Flamme den Sootkörper trifft. Eine genauere Positionierung des Brenners im Verhältnis zu der Oberfläche des erzeugten Sootkörpers kann der DE 101 02611 A jedoch nicht entnommen werden. Auch wird der technische Einfluss des Abstands des Brenners von der Oberfläche des Sootkörpers in der DE 101 02 611 A nicht diskutiert.

DE 102 25 106 A beschreibt ein übliches Sootverfahren zur Herstellung von synthetischem Quarzglas, bei welchem zunächst einmal in einer Vorreaktionszone sogenannte Primärpartikel aus $SiCl_4$, einem Brennstoff und einem sauerstoffhaltigen Medium gebildet werden und im Anschluss in eine Brennerflamme zu $SiO_2$-Teilchen umgesetzt werden, die dann auf einem Träger abgeschieden werden. Dabei stellt DE 102 25 106 A auf eine Verbesserung der Abscheideeffizienz ab, was durch die Einstellung des Volumenverhältnis von einem verwendeten Trägergas (Wasserstoff, $H_2$) zu dem $SiCl_4$-Ausgangsstoff erreicht wird.

US 2004/182114 A beschreibt ein übliches Sootverfahren zur Herstellung von synthetischem Quarzglas, bei welchem die Abscheideeffizienz der siliziumhaltigen Ausgangsverbindung untersucht wird und wobei unter anderem festgestellt wird, dass die Abscheideeffizienz des siliziumhaltigen Ausgangsmaterials verbessert werden kann, wenn der Abstand des Brenners von der Abscheidungsoberfläche der Soot-Teilchen während des Verfahrens 150 bis 500 mm beträgt. Dabei befindet sich die Abscheidungsoberfläche der Soot-Teilchen in der durch den Brenner erzeugten Flamme. Eine genauere Positionierung der Flamme im Verhältnis zu der Oberfläche des erzeugten Sootkörpers kann der US 2004/182114 A jedoch nicht entnommen werden.

Um einen kohlenstoffhaltigen Sootkörper, der nach dem Verglasen einen niedrigeren OH-Wert (gut für Fiberanwendungen) aufweist, bereitzustellen, schlägt die DE 10 2011 121 153 A vor, während der Abscheidung der $SiO_2$-Teilchen die Polysiloxanverbindung im Vergleich zu Sauerstoff überstöchiometrisch in die Flamme zu führen, also eine sogenannte fette Flamme bei der Abscheidung zu verwenden.

Insgesamt sind die Verfahren des Standes der Technik im Hinblick auf die Abscheideeffizienz des siliziumhaltigen Ausgangsmaterials immer noch verbesserungswürdig und es besteht daher Bedarf nach einem Verfahren zur Herstellung von synthetischem Quarzglas, mit welchem die Abscheideeffizienz des siliziumhaltigen Ausgangsmaterials verbessert werden kann. Mit einer verbesserten Abscheideeffizienz gehen geringe Herstellungskosten für das synthetische Quarzglas einher.

Im Rahmen der vorliegenden Erfindung wird unter der Abscheideeffizienz der Quotient aus dem Gewicht des auf dem Targetrohr abgeschiedenen $SiO_2$ zu der rechnerisch (bei vollständiger Umsetzung allen Siliziums aus der eingesetzten Vorläufermenge) erzeugten Gesamtmenge an $SiO_2$ verstanden.

Gelöst wird diese Aufgabe erfindungsgemäß nun durch ein Verfahren zur Herstellung von synthetischem Quarzglas, welches zunächst durch die die folgenden Verfahrensschritte gekennzeichnet ist:

(1) Verdampfen eines Einsatzmaterials, das mindestens eine siliziumorganische Ausgangsverbindung enthält, unter Bildung eines Einsatzmaterialdampfes;

(2) Zuführen des Einsatzmaterialdampfes aus Verfahrensschritt (1) zu einer Reaktionszone, in welcher der Einsatzmaterialdampf in Gegenwart von Sauerstoff in einer Flamme verbrannt wird und durch Oxidation und/oder durch Hydrolyse zu $SiO_2$-Sootteilchen umgesetzt wird;

(3) Abscheiden der aus Verfahrensschritt (2) resultierenden $SiO_2$-Sootteilchen auf einer Ablagerungsfläche unter Ausbildung eines Sootkörpers; und

(4) gegebenenfalls Trocknen und Verglasen des aus Verfahrensschritt (3) resultierenden Sootkörpers unter Bildung von synthetischem Quarzglas.

Das erfindungsgemäße Verfahren ist dann dadurch gekennzeichnet, dass sich im Verfahrensschritt (3) die Ablagerungsfläche für die $SiO_2$-Sootteilchen für einen Zeitraum von mindestens 50 % der Aufbauzeit des Sootkörpers in einer Entfernung vom Brenner befindet, in welchem die horizontal über die gesamte Flamme integrierte Leuchtintensität der targetlosen Flamme, gemessen in Candela/mm$^2$, noch mindestens 2/3 der maximalen horizontal integrierten Leuchtintensität der targetlosen Flamme im Maximum beträgt.

Im Rahmen der vorliegenden Erfindung kann der Verfahrensschritt (2) gegebenenfalls in Gegenwart brennbarer Hilfsgase und gegebenenfalls in Gegenwart nicht oxidierend wirkender Trenngase durchgeführt werden.

Im Rahmen der vorliegenden Erfindung ist somit vorgesehen, dass die Distanz zwischen Brenner (gemessen ab der Stelle an der Kontakt zur umgebenden Umweltatmosphäre entsteht) und der Abscheidefläche so gewählt wird, dass sie einer Entfernung (Höhe) entspricht, bei der die ungestörte (targetlose) Flamme das Maximum ihrer Leuchtintensität hat. Als Leuchtintensität versteht man dabei das Integral über die gesamte Flammenbreite bei der jeweiligen Höhe (Abstand zum Brenner).

Im Rahmen der vorliegenden Erfindung ist des Weiteren insbesondere vorgesehen, dass der oben beschriebene Brennerabstand nicht beidseitig um das Maximum der Leuchtintensität der Flamme liegt, sondern zwischen der Position des Maximums der Leuchtintensität der targetlosen Flamme bis zu einer Stelle hinter dem Maximum (vom Brenner aus betrachtet) liegt, bei welcher die horizontal integrierte Leuchtintensität der Flamme noch mindestens 2/3 des Maximums beträgt.

Der erfindungsgemäß vorgesehene Abstand ist derjenige zwischen Brenner (= Stelle an der die Brennergase auf Umgebungsatmosphäre treffen) und dem Ort, bei dem sich die $SiO_2$-Teilchen zunächst auf der Oberfläche eines Trägers und später auf der Oberfläche des sich bildenden Sootkörpers abscheiden.

Unter einer targetlosen Flamme wird eine Syntheseflamme verstanden, die ohne Aufbaurohr betrieben wird, da ansonsten die Flammenform von der Dicke des Targetrohres (oder Sootkörpers) und dem Abstand des Brenners zur Targetfläche und der Targettemperatur abhängen würde. Die Synthese-Flamme ist dabei im Allgemeinen im Wesentlichen ungestört.

Im Rahmen der vorliegenden Erfindung ist es insbesondere bevorzugt, wenn im Verfahrensschritt (3) die Ablagerungsfläche für die $SiO_2$-Sootteilchen für einen Zeitraum von mindestens 60 %, weiter bevorzugt mindestens 70 %, noch weiter bevorzugt mindestens 80 %, noch weiter bevorzugt mindestens 90 %, noch weiter bevorzugt mindestens 95 %, noch weiter bevorzugt 100 %, der Aufbauzeit des Sootkörpers in einer Entfernung vom Brenner befindet, in welchem die horizontal über die gesamte Flammenbreite integrierte Leuchtintensität der targetlosen Flamme, gemessen in Candela/mm noch mindestens 2/3 der maximalen horizontal integrierten Leuchtintensität der targetlosen Flamme im Maximum beträgt.

Die vorliegende Erfindung betrifft darüber hinaus ein gattungsgemäßes wie vorstehend definiertes Verfahren, in welchem sich die auf dem Sootkörper abscheidenden SiO$_2$-Sootteilchen für einen Zeitraum von mindestens 50 % der Aufbauzeit des Sootkörpers in einem Bereich der Flamme (= Abstand vom Brenner) befindet, der sich in einem Bereich um das Maximum der der Leuchtintensität einer im Wesentlichen ungestörten targetlosen Flamme befindet, in welchem die horizontal über die gesamte Flammenbreite integrierte Leuchtintensität der Flamme, gemessen in Candela/mm, noch mindestens 70 %, weiter bevorzugt mindestens 72 %, noch weiter bevorzugt mindestens 74 %, der Intensität im Maximum beträgt. Erfindungsgemäß hat es sich als vorteilhaft herausgestellt, dass die Positionierung der Oberfläche, auf welche sich die SiO$_2$-Teilchen abscheiden, unterhalb der Ausbrennlänge der verwendeten Flamme erfolgt, sodass auf der Oberfläche noch eine Verbrennung stattfinden kann.

Da der Hauptbeitrag der Leuchtintensität Schwarzkörperstrahlung von unverbranntem Kohlenstoff ist, wie spektrale Messungen gezeigt haben, ist das erfindungsgemäße Vorgehen eigentlich kontraintuitiv. Da dort offensichtlich nicht genug Sauerstoff zur Verbrennung des Kohlenstoffes vorliegt, ist anzunehmen, dass auch nicht genügend Sauerstoff zur kompletten Umsetzung des Siliziums in der Ausgangsverbindung zu SiO$_2$ vorliegt. Der Hauptabscheidemechanismus nach gängigem Stand der Technik ist aber die Wirkung der Thermophorese auf bereits umgesetzte SiO$_2$-Partikel, bei der die heißere Flamme die Teilchen auf die kältere Abscheideoberfläche drückt. Da aber nur umgesetztes SiO$_2$ in Partikelform vorliegt, sollte eine Positionierung der Abscheideoberfläche an einer Stelle, an der die Umsetzung noch nicht komplett ist, eigentlich zu schlechteren Abscheideeffizienzen führen.

Erfindungsgemäß wurde also herausgefunden, dass die Abscheideeffizienz der SiO$_2$-Teilchen deutlich verbessert werden kann, wenn sich die Abscheideoberfläche für einen Zeitraum von mindestens 50 % der Aufbauzeit des Sootkörpers in einem bestimmten Bereich der Flamme befinden. Damit sieht das erfindungsgemäße Verfahren zumindest für einen bestimmten Zeitraum der Aufbauzeit des Sootkörpers eine Positionierung der Oberfläche des Sootkörpers in der Flamme vor, so dass an der Oberfläche des Sootkörpers noch eine Verbrennung der siliziumhaltigen Ausgangsverbindung stattfinden kann.

Dabei wird im Rahmen der vorliegenden Erfindung unter der Aufbauzeit des Sootkörpers die Zeitdauer der Zuführung der siliziumhaltigen Ausgangsverbindung in das erfindungsgemäße Verfahren

$$t_{Aufbauzeit} = \Delta t_{Start – Ende\ Zuführung\ siliziumhaltige\ Ausgangsverbindung}$$

verstanden. Die Aufbauzeit des Sootkörpers ist abhängig von der gewünschten Größe des hergestellten Sootkörpers.

Die erfindungsgemäß verbesserte Abscheideeffizienz ergibt sich, wie bereits definiert, durch den Quotienten aus dem Gewicht des erzeugten Sootkörpers und der rechnerisch maximal erzeugbaren Gesamtmenge an SiO$_2$ unter der Annahme einer vollständigen Umsetzung des Siliziums aus der eingesetzten siliziumhaltigen Ausgangsverbindung.

Da die Chemilumineszenz sehr lokal auftritt und die Leuchtintensitäten im UV und IR schwerer zu bestimmen sind, wurde zur Bestimmung der Flammenform eine Kamera verwendet, die nach dem unten beschriebenen Verfahren auf die abgeleitete SI-Einheit Candela kalibriert wurde. Candela entspricht in etwa der Wahrnehmung des menschlichen Auges und berücksichtigt die UV und IR-Anteile nicht, für welche spezielle Kameras und Fenster nötig wären. Der Großteil der auf Candela kalibrierten Intensität entstammt daher der Schwarzkörperstrahlung der in der Flamme entstandenen SiO$_2$ und Kohlenstoffrußteilchen. Die Kalibrierung auf die SI-Einheit Candela ist im experimentellen Teil weiter unten beschrieben.

Die erfindungsgemäße Spezifizierung des Abstands des Brenners von der Oberfläche des Sootkörpers führt dazu, dass sich die Abscheideoberfläche unterhalb der Ausbrennlänge der Flamme, ab der keine nicht verbrannte siliziumorganische Ausgangsverbindung mehr vorliegt, befindet, so dass an der Oberfläche des Sootkörpers noch eine Verbrennung stattfinden kann. Damit erhöht sich die Abscheideeffizienz in der erfindungsgemäßen Verfahrensweise im grundlegenden Unterschied zu der Auffassung des Standes der Technik, welcher eine Position des Sootkörpers oberhalb der Ausbrennlänge, d.h. außerhalb der Flamme, empfiehlt.

Zur Bestimmung der Leuchtintensität der Flamme in einer bestimmten Höhe über dem Brenner wird die Leuchtintensität der Flamme (in cd/mm$^2$) aus der flächigen Kameraabbildung pro horizontaler Pixelreihe der Kamera über die gesamte Breite der Flamme integriert (ergibt als Einheit dann cd/mm) und der so ermittelte Wert dann für alle Pixelzeilen ermittelt und für die gesamte Höhe der Flamme ermittelt. Man erhält dann die Leuchtintensität der targetlosen Flamme als Funktion des vertikalen Abstands vom Brenner.

Im Nachfolgenden werden die einzelnen Verfahrensschritte des erfindungsgemäßen Verfahrens näher beschrieben:

**Verfahrensschritt (1) - Verdampfen des Einsatzmaterials**

Im Verfahrensschritt (1) wird ein Einsatzmaterial, das mindestens eine siliziumorganische Ausgangsverbindung enthält, unter Bildung eines Einsatzmaterialdampfes verdampft. Bei der siliziumorganischen Ausgangsverbindung handelt es sich bevorzugt um eine Polyalkylsiloxanverbindung.

Grundsätzlich kann erfindungsgemäß jede Polyalkylsiloxanverbindung, welche sich zur Herstellung von synthetischem Quarzglas eignet, verwendet werden. Im Rahmen der Erfindung umfasst der Begriff Polyalkylsiloxan sowohl lineare (umfassend auch verzweigte Strukturen) als auch zyklische Molekularstrukturen.

Besonders geeignete cyclische Vertreter sind Polyalkylsiloxane mit der allgemeinen Summenformel

$$Si_pO_p(R)_{2p},$$

wobei p eine ganze Zahl größer gleich 3 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt.

Die Polyalkylsiloxanverbindung ist dabei vorzugsweise ausgewählt aus der Gruppe, bestehend aus Hexamethylcyclotrisiloxan (D3), Octamethylcyclotetrasiloxan (D4), Decamethylcyclopentasiloxan (D5), Dodecamethylcyclohexasiloxan (D6), Tetradekamethylcycloheptasiloxan (D7), Hexadecamethylcyclooctasiloxan (D8) sowie deren linearen Homologen und beliebigen Mischungen der vorgenannten Verbindungen. Die Notation D3, D4, D6, D7 und D8 entstammt dabei einer von General Electric Inc. eingeführten Notation, bei der "D" die Gruppe $[(CH_3)_2Si]$-O- repräsentiert.

Im Rahmen der vorliegenden Erfindung können auch Mischungen der vorgenannten Polyalkylsiloxanverbindungen verwendet werden.

Wegen der großtechnischen Verfügbarkeit in hoher Reinheit wird derzeit Octamethylcyclotetrasiloxan (OMCTS) bevorzugt eingesetzt. Im Rahmen der vorliegenden Erfindung ist es daher insbesondere bevorzugt, wenn es sich bei der Polyalkylsiloxanverbindung um Octamethylcyclotetrasiloxan (D4) handelt.

Grundsätzlich ist es möglich, dass das Einsatzmaterial vor dem Einbringen in Verfahrensschritt (1) einer Aufreinigung unterzogen wird. Dem Fachmann sind solche Aufreinigungsverfahren bekannt. In einer bevorzugten Ausführungsform wird das Einsatzmaterial jedoch zuvor keinem vorgeschaltetem Aufreinigungsverfahren unterzogen.

Die Verdampfung des Einsatzmaterials kann mit oder ohne Anwesenheit einer Trägergas-Komponente erfolgen. Bevorzugt erfolgt die Verdampfung des Einsatzmaterials in Anwesenheit eines Trägergases, da dadurch die Verdampfung bei Temperaturen unterhalb des Siedepunktes der siliziumorganischen Ausgangsverbindung erfolgen kann. Als Trägergas wird üblicherweise ein Inertgas, beispielsweise Stickstoff oder Argon, verwendet. Wenn ein Trägergas verwendet wird, so liegt das Molverhältnis der siliziumorganischen Ausgangsverbindung zum Trägergas bevorzugt im Bereich von 0,01 bis 2; besonders bevorzugt im Bereich von 0,02 bis 1,5 und ganz besonders bevorzugt im Bereich von 0,05 bis 1,25. Insbesondere ist es bevorzugt, dass als Trägergas Stickstoff mit Feuchtegehalt < 40 Volumen-ppm eingesetzt wird und als Polyalkylsiloxanverbindung OMCTS. Dabei ist es des Weiteren bevorzugt, dass das molekulare Verhältnis von OMCTS zu Stickstoff im Bereich von 0,015 bis 1,5 liegt.

Der Verfahrensschritt des Verdampfens ist dem Fachmann an sich bekannt. Dabei wird die siliziumorganische Ausgangsverbindung je nach gewähltem molekularem Verhältnis der siliziumorganischen Ausgangsverbindung und Trägergas vorzugsweise bei Temperaturen zwischen 120 und 200 °C in eine dampfförmige Phase überführt. Dabei sollte die Verdampfungstemperatur in der Verdampfungskammer immer mindestens einige Grad oberhalb des Taupunktes der siliziumorganischen Ausgangsverbindung sein. Der Taupunkt ist wiederum abhängig vom gewählten molekularen Verhältnis aus siliziumorganischer Ausgangsverbindung und Trägergas. In einem bevorzugten Ausführungsverfahren wird dazu die siliziumorganische Ausgangsverbindung vor der Verdampfung auf Temperaturen zwischen 40 und 120 °C vorerwärmt und anschließend in eine Verdampfungskammer versprüht, die eine höhere Temperatur als die Vorerwärmung der Einsatzstoffe aufweist. Das inerte Trägergas kann in einer bevorzugten Ausführungsform zusätzlich auf Temperaturen von bis zu 250 °C vorerwärmt werden, bevor es der Verdampfungskammer zugeführt wird. Von Vorteil ist, dass die Temperatur in der Verdampfungskammer im Mittel immer oberhalb der Taupunktstemperatur der Mischung aus siliziumorganischer Ausgangsverbindung und Trägergas liegt. Geeignete Verdampfungsverfahren werden z. B. in den Internationalen Patentanmeldungen WO 2013/087751 A und WO 2014/187513 A sowie der deutschen Patentanmeldung DE 10 2013 209 673 beschrieben.

Im Rahmen der Erfindung beschreibt der Begriff "Taupunkt" die Temperatur, bei der sich ein Gleichgewichtszustand von kondensierender und verdunstender Flüssigkeit einstellt.

Im Rahmen der vorliegenden Erfindung wird unter einer "Verdampfung" der Vorgang verstanden, bei der das Einsatzmaterial im Wesentlichen von der flüssigen Phase in eine gasförmige Phase überführt wird. Dies geschieht bevorzugt, indem, wie oben beschrieben, Temperaturen verwendet werden, welche oberhalb des Taupunktes der siliziumorganischen Ausgangsverbindung als Hauptkomponente des Einsatzmaterials liegen. Dem Fachmann ist dabei bewusst, dass verfahrenstechnisch nicht ausgeschlossen werden kann, dass kleine Flüssigkeitstropfen des Einsatzmaterials mitgerissen werden können. Somit wird im Verfahrensschritt (1) bevorzugt ein Einsatzmaterialdampf erzeugt, welcher vorzugsweise nicht weniger als 97 Mol.-%, bevorzugt nicht weniger als 98 Mol.-%, besonders bevorzugt nicht weniger als 99 Mol.-%, ganz besonders bevorzugt nicht weniger als 99,9 Mol.-% gasförmige Bestandteile enthält.

Die dampfförmige siliziumorganische Ausgangsverbindung bzw. ein Gemisch aus Trägergas und dampfförmiger siliziumorganischer Ausgangsverbindung wird üblicherweise der Verdampfungskammer entnommen und in einen Brenner geleitet. Vor dem Einleiten in den Brenner wird das dampfförmige Material bzw. die Mischung aus dampfförmigem Material und Trägergas vorzugweise mit Sauerstoff gemischt. In der Flamme wird die siliziumorganische Ausgangsverbindung zu $SiO_2$ oxidiert. Es bildet sich feinteiliges, amorphes $SiO_2$ ($SiO_2$-Ruß), das in Form einer porösen Masse zunächst auf der Oberfläche eines Trägers und später auf der Oberfläche des sich bildenden Sootkörpers abgeschieden wird.

**Verfahrensschritt** (2) - Zuführen des Einsatzmaterialdampfes zu einer Reaktionszone, in welcher der Einsatzmaterialdampf in Gegenwart von Sauerstoff in einer Flamme verbrannt wird und durch Oxidation und/oder durch Hydrolyse zu **$SiO_2$-Sootpartikeln** umgesetzt wird

Im Verfahrensschritt (2) wird der aus Verfahrensschritt (1) resultierende gasförmige Einsatzmaterialdampf zu einer Reaktionszone geführt, in dem der Einsatzmaterialdampf durch Oxidation und/oder oder durch Hydrolyse zu $SiO_2$-Teilchen umgesetzt wird.

Dieser Verfahrensschritt entspricht insbesondere dem bekannten. Die mögliche Ausgestaltung dieses Verfahrens ist dem Fachmann bekannt.

Für die Verbrennung des Einsatzmaterialdampfs wird üblicherweise ein konzentrischer Brenner verwendet, der um den Mittelpunkt des Brennermunds kreisförmig angeordnete Gasaustrittsdüsen aufweist.

Im Rahmen der vorliegenden Erfindung wird eine Verfahrensweise bevorzugt, bei welcher dem Abscheidebrenner in einem zentralen Bereich eine erste siliziumorganische Ausgangsverbindung, in einem äußeren Bereich ein Sauerstoffstrom und zwischen dem zentralen Bereich und dem äußeren Bereich ein Trenngas-Strom (wasserstoffhaltig) zugeführt werden.

Die Mitteldüse dient dabei in der Regel zum Zuführen des Einsatzmaterialdampfs, welcher im Rahmen der vorliegenden Erfindung üblicherweise mit einem Trägergas vorgemischt verwendet wird. Darüber hinaus wird dem Einsatzmaterialdampf vorzugsweise Sauerstoff zugesetzt, so dass aus der Mitteldüse des üblicherweise verwendeten konzentrischen Brenners ein Feedstrom resultiert, der neben dem Einsatzmaterialdampf noch das Trägergas und Sauerstoff enthält.

Damit unterschiedet sich diese bevorzugte erfindungsgemäße Verfahrensweise erheblich von dem Verfahren, welches in der DE 10 2011 121 153 A beschrieben ist, die empfiehlt, eine fette Brennstoffmischung, d.h. einen Überschuss an $SiO_2$-Ausgangsverbindung und somit einen Unterschuss an Sauerstoff, zu verwenden. Der Fachmann, der ausgehend von der Lehre der DE 10 2011 121 153 A die Abscheideeffizienz des gattungsgemäßen Verfahrens verbessern möchte, würde noch weiteren Sauerstoff in der Feeddüse als kontraproduktiv betrachten.

Die Mitteldüse des Brenners wird in der Regel von einer zweiten Düse, die konzentrisch um die Mitteldüse angeordnet ist, umfasst und aus welcher ein Trenngas in den Brenner eingeführt wird. Dieses Trenngas trennt die $SiO_2$-Ausgangsverbindung von dem weiteren Sauerstoffstrom, der aus einer weiteren konzentrisch um die Mitteldüse und die Trenngasdüse angeordnete konzentrische Düse in den Brenner einströmt.

Erfindungsgemäß ist vorgesehen, dass der Abstand zwischen dem Brenner und der Oberfläche des Sootkörpers während des Abscheidevorgangs gegebenenfalls angepasst wird, damit die vorstehende Bedingung, dass sich die Abscheideoberfläche für einen Zeitraum von mindestens 50 % der Aufbauzeit des Sootkörpers in einer Höhe (= Abstand vom Brenner) der Flamme befindet, in welchem die horizontal integrierte Leuchtintensität der unter gleichen Bedingungen targetlos betriebenen Flamme noch mindestens 2/3 der maximalen horizontal integrierten Leuchtintensität der Flamme beträgt, erreicht wird. Der dabei vorgesehene Abstand ergibt sich aus der nachfolgenden Definition und bedarf aufgrund des Anwachsens des Sootkörpers gegebenenfalls einer Anpassung.

Zu diesem Zweck ist es grundsätzlich möglich, die Position des Brenners und/oder des Sootkörpers zu verändern, wobei in einer bevorzugten Ausführungsform der Brenner bewegt wird, während die Position des Sootkörpers nicht verändert wird.

Bei einem Abscheidebrenner mit bündig am Brennermund abschließenden Düsen ergibt sich der Abstand zwischen Abscheidebrenner und Ablagerungsfläche der Sootteilchen als kürzeste Strecke zwischen Brennermund und der Oberflache des sich bildenden Sootkörpers. Andernfalls wird dieser Abstand definiert als die kürzeste Strecke zwischen der Stelle, an dem die Brennergase auf Umweltatmosphäre treffen und der Oberfläche des sich bildenden Sootkörpers. Dabei handelt es sich in der Regel um die zentrale Düse (Mitteldüse) einer bevorzugt verwendeten konzentrischen Brennerform.

Die mittels des Abscheidebrenners erzeugten $SiO_2$-Sootteilchen werden üblicherweise auf einem um seine Längsachse rotierenden Trägerrohr abgeschieden, so dass schichtweise der Sootkörper aufgebaut wird. Hierzu kann der Abscheidebrenner entlang der Längsachse des Trägerrohrs zwischen zwei Wendepunkten hin- und herbewegt werden. Darüber hinaus ist die Verwendung von einem Brennerblock bevorzugt, in welchem sich mehrere Abscheidebrenner mit jeweils einer Flamme befinden. In dem Fall der Verwendung eines Brennerblocks wird der Abstand mindestens eines Brenners, weiter bevorzugt jedem einzelnen Brenner, und der Oberfläche des Sootkörpers vorzugsweise entsprechend der erfindungsgemäßen Überlegung eingestellt.

Im Rahmen der vorliegenden Erfindung wurde des Weiteren herausgefunden, dass es für die Ausbeuteeffizienz günstig ist, wenn die Luftzahl, d.h. das Verhältnis von Sauerstoff aus dem Brenner (inkl. Feed-Sauerstoff) zu allen brennbaren Stoffen die dem Brenner aktiv (d.h. unter Druck) zugeführt werden, kleiner gleich 1 ist (fette Flamme). Erfindungsgemäß ist daher weiter bevorzugt vorgesehen, dass Sauerstoff im Verfahrensschritt (2) unterstöchiometrisch im Verhältnis zu dem zu hydrolysierenden und/oder polymerisierenden Einsatzmaterialdampf verwendet wird.

Weiter bevorzugt sind Luftzahlen kleiner gleich 0,95, noch weiter bevorzugt kleiner gleich 0,90, noch weiter bevorzugt kleiner gleich 0,85, noch weiter bevorzugt kleiner gleich 0.80, noch weiter bevorzugt kleiner gleich 0,78, noch weiter bevorzugt kleiner gleich 0,76.

Durch die Einstellung der Luftzahl auf die zuvor genannten bevorzugten Bereiche ist es möglich, zusammen mit der erfindungsgemäßen Einstellung des Abstands zwischen Brenner und der Oberfläche des Sootkörpers die Abscheideeffizienz weiter zu verbessern, da die Eigenschaften der erfindungsgemäß verwendeten Flamme durch die Einstellung einer Luftzahl auf einen Wert kleiner gleich 1 beeinflusst wird, was zu einer verbesserten Abscheideeffizienz führt.

Die Luftzahl $\lambda$ ist definiert als das Verhältnis der tatsächlich zur Verfügung stehenden Sauerstoffmenge zur mindestens notwendigen Sauerstoffmenge, die für eine stöchiometrisch vollständige Verbrennung theoretisch benötigt wird.

Die Verwendung von einem fetteren Brenngemisch (einhergehend mit einer Luftzahl von kleiner gleich 1 führt zu einem späteren, lokalen Zünden nur der Randgebiete der Flamme. Es zünden dabei zuerst nur die äußeren Randbereiche des Feeddüsenstromes, in welchen bereits genug $O_2$ der äußeren Oxidiergas (Sauerstoff) - Düse(n)eindiffundiert ist. Der Kernbereich der Flamme ist durch das zu fette Gemisch zündunwilliger. Dadurch zündet nur ein kleineres Gasvolumen gleichzeitig und der Sauerstoff muss erst nachdiffundieren. Die Expansion der heißen Verbrennungsgase von Gebieten, die durchgezündet haben, macht die Flamme turbulenter. Der Effekt ist selbstverstärkend, da die erhöhte Turbulenz die Vermischung mit Sauerstoff fördert. Das Gasvolumen, das über eine zündfähige Mischung verfügt, streckt sich bei der erfindungsgemäßen Verfahrensweise weit nach oben und hat geringere laterale Ausdehnung. Das führt zu einer viel laminareren Flamme. Die damit einhergehende Auswirkung ist, dass die schmalere, laminarere Flamme sich besser an den Sootkörper anlegt und einen stabileren Staupunkt ausbildet. Dieses führt zu kürzeren Diffusionswegen für die $SiO_2$-Teilchen zur Abscheidungsoberfläche des Sootkörpers und erhöht die Verweilzeit im Staupunkt, was insgesamt eine höhere Abscheideeffizienz bewirkt.

Die herabgesetzte Zündfähigkeit in der fetteren Gasanordnung bewirkt eine Verkleinerung der Gasregionen, die gleichzeitig zünden (kleinere "Flamelets"). Die starke Volumenerhöhung in solchen Zonen durch thermische Expansion und Molgewinn (beispielsweise erzeugt 1 mol OMCTS-Gas das x-fache an Molen Verbrennungsgase) durch Zersetzung erzeugt Druckwellen, die die Flamme viel turbulenter machen. Daher resultiert aus weniger simultan zündendem Volumen eine laminarere Flamme mit höhere Ausbrennlänge mit den zuvor beschrieben Vorteilen. Dabei ist zu berücksichtigen, dass im Brenner- und Flammenzentrum bei der erfindungsgemäßen Verfahrensweise nur Feedstrom und Wasserstoff vorliegen, die gemeinsam zu fett sind, um schnell zu zünden und dass der Sauerstoff der äußeren Düse wegen geringerer Turbulenz erst später ins Zentrum, verteilt auf eine längere Wegstrecke, gelangt.

Da im Rahmen der vorliegenden Erfindung das Einsatzmaterial vorzugsweise zusammen mit einem Trägergas und Sauerstoff aus der zentralen Düse des vorzugsweise konzentrischen Brenners in die Brennzone abgegeben wird, ist zu berücksichtigen, dass sich die Menge an Sauerstoff zur Berechnung der Luftzahl aus der Beimengung des Sauerstoffs in den Strom des Einsatzmaterials und dem zusätzlich verwendeten Sauerstoff in der äußeren Düse (Brenngas) des konzentrischen Brenners ergibt.

Im Rahmen des erfindungsgemäßen Verfahrens kann die Luftzahl deutlich unter den von der DE 10 2011 121 153 A definierten Wert reduziert werden und gleichzeitig die Abscheideeffizienz deutlich erhöht werden.

## Verfahrensschritt (3) - Abscheiden der $SiO_2$-Teilchen

Im Verfahrensschritt (3) werden die aus Verfahrensschritt (2) resultierenden $SiO_2$-Teilchen auf einer Ablagerungsfläche abgeschieden. Die Ausgestaltung dieses Verfahrensschritts liegt im Können und Wissen des Fachmanns.

Hierzu werden die im Verfahrensschritt (2) gebildeten $SiO_2$-Teilchen auf einem rotierenden Träger schichtweise unter Bildung eines porösen Sootkörpers abgeschieden.

Während des Abscheidens der Soot-Teilchen wird der Abstand zwischen dem Brenner und dem Trägermaterial gegebenenfalls verändert, um die zuvor bereits beschriebene Voraussetzung zu erfüllen.

## Verfahrensschritt (4) - gegebenenfalls Trocknen und Verglasen

Im Verfahrensschritt (4) werden die aus Verfahrensschritt (3) resultierenden $SiO_2$-Teilchen unter Bildung von synthetischem Quarzglas gegebenenfalls getrocknet und verglast. Dieser Verfahrensschritt ist insbesondere dann notwendig, wenn die zuvor durchgeführten Verfahrensschritte gemäß einem Sootverfahren durchgeführt wurden. Die Ausgestaltung dieses Verfahrensschritts liegt im Können und Wissen des Fachmanns.

Das erfindungsgemäße Verfahren eignet sich zur Herstellung von Quarzglas nach dem "Sootverfahren", bei welchem die Temperatur beim Abscheiden der $SiO_2$-Teilchen im Verfahrensschritt (3) so niedrig ist, dass eine poröse $SiO_2$-Sootschciht erhalten wird, die im separaten Verfahrensschritt (4) zu synthetischem Quarzglas getrocknet und verglast wird.

Bei dem erfindungsgemäßen Verfahren handelt es sich insbesondere um ein Outside Vapor Deposition Method (OVD)-Verfahren, Vapor Axial Deposition (VAD)-Verfahren oder ein Soot-Boule-Verfahren. Entsprechende OVD- und VAD-Verfahren sind dem Fachmann hinlänglich bekannt und ein Soot-Boule-Verfahren ist beispielsweise bekannt aus der US 8,230,701.

Durch das erfindungsgemäße Verfahren lassen sich die Herstellungskosten für Quarzglas reduzieren.

Weiterer Gegenstand der vorliegenden Erfindung ist eine Vorrichtung zur Herstellung von synthetischem Quarzglas, wobei Vorrichtung umfasst:

(a) mindestens eine Verdampferzone zum Verdampfen mindestens eines Einsatzmaterials, das mindestens eine siliziumorganische Ausgangsverbindung enthält, unter Bildung eines Einsatzmaterialdampfes;

(b) mindestens eine Reaktionszone, in welche der Einsatzmaterialdampf aus Verfahrensschritt (a) geführt wird und in welcher das Einsatzmaterial durch Pyrolyse oder durch Hydrolyse zu $SiO_2$-Teilchen umgesetzt wird, wobei die Reaktionszone einen Brenner umfasst; und

(c) mindestens eine Abscheidezone mit einer Ablagerungszone für die aus der Reaktionszone (b) resultierenden $SiO_2$-Teilchen unter Bildung von synthetischem Quarzglas, wobei die Ablagerungszone einen Sootkörper umfasst.

In der erfindungsgemäßen Vorrichtung ist der Abstand des Brenners (b) zu der Oberfläche des Sootkörpers veränderbar und kann zumindest dergestalt eingestellt werden, dass die Oberfläche des Sootkörpers sich in einem Bereich der Flamme (= Brennerabstand) befindet, der zwischen der Position (Höhe des) des Maximums der Leuchtintensität einer unter gleichen Gasströmen betriebenen, targetlosen Vergleichsflamme bis zu einer Stelle hinter dem Maximum (vom Brenner aus betrachtet) reicht bei welcher die horizontal (über die gesamte Flammenbreite in der jeweiligen Höhe) integrierte Leuchtintensität der Flamme noch mindestens 2/3 der maximalen horizontal integrierten Leuchtintensität der Flamme beträgt.

Die vorliegende Erfindung betrifft darüber hinaus eine gattungsgemäß wie vorstehend definierte Vorrichtung, in welchem sich die auf dem Sootkörper abscheidenden $SiO_2$-Sootteilchen für einen Zeitraum von mindestens 50 % der Aufbauzeit des Sootkörpers in einem Bereich der Flamme (= Abstand vom Brenner) befindet, der sich in einem Bereich um das Maximum der der Leuchtintensität der im Wesentlichen ungestörten targetlosen Flamme befindet, in welchem die horizontal über die gesamte Flammenbreite integrierte Leuchtintensität der Flamme, gemessen in Candela/mm, noch mindestens 70 %, weiter bevorzugt mindestens 72 %, noch weiter bevorzugt mindestens 74 %, der Intensität im Maximum beträgt.

Im Rahmen der vorliegenden Erfindung ist es insbesondere bevorzugt, wenn die erfindungsgemäße Vorrichtung so ausgebildet ist, dass (im Verfahrensschritt (3)) die Ablagerungsfläche für die $SiO_2$-Sootteilchen für einen Zeitraum von mindestens 60 %, weiter bevorzugt mindestens 70 %, noch weiter bevorzugt mindestens 80 %, noch weiter bevorzugt mindestens 90 %, noch weiter bevorzugt mindestens 95 %, noch weiter bevorzugt 100 %, der Aufbauzeit des Sootkörpers in einer Entfernung vom Brenner befindet, in welchem die horizontal über die gesamte Flamme integrierte Leuchtintensität der targetlosen Flamme, gemessen in Candela/mm, noch mindestens 2/3 der maximalen horizontal integrierten Leuchtintensität der targetlosen Flamme im Maximum beträgt.

Erfindungsgemäß hat es sich als vorteilhaft herausgestellt, dass die Positionierung der Oberfläche, auf welche sich die $SiO_2$-Teilchen abscheiden, unterhalb der Ausbrennlänge der verwendeten Flamme erfolgt, sodass auf der Oberfläche noch eine Verbrennung stattfinden kann.

In Übereinstimmung mit den obigen Ausführungen zu dem erfindungsgemäßen Verfahren werden die Gasströme in dem Brenner der erfindungsgemäßen Vorrichtung, d.h. das Verhältnis von Sauerstoff aus dem Brenner (inkl. Feed-Sauerstoff) zu allen brennbaren Stoffen die dem Brenner aktiv (d.h. unter Druck) zugeführt werden, vorzugsweise so eingestellt, dass eine Luftzahl für alle dem Brenner aktiv (d.h. unter Druck) zugeführten Gase kleiner oder gleich 1 realisiert wird.

In Übereinstimmung mit den obigen Ausführungen zu dem erfindungsgemäßen Verfahren werden die Gasströme in dem Brenner der erfindungsgemäßen Vorrichtung, d.h. das Verhältnis von aktiv unter Druck zugeführtem Sauerstoff aus dem Brenner (inkl. Zentraldüsen-Feed-Sauerstoff) zu allen brennbaren Stoffen die dem Brenner aktiv (d.h. unter Druck) zugeführt werden, vorzugsweise so eingestellt, dass eine Luftzahl kleiner oder gleich 0,90 realisiert wird.

In Übereinstimmung mit den obigen Ausführungen zu dem erfindungsgemäßen Verfahren werden die Gasströme in dem Brenner der erfindungsgemäßen Vorrichtung, d.h. das Verhältnis von Sauerstoff aus dem Brenner (inkl. Zentraldüsen-Feed-Sauerstoff) zu allen brennbaren Stoffen die dem Brenner aktiv (d.h. unter Druck) zugeführt werden, vorzugsweise so eingestellt, dass eine Luftzahl kleiner oder gleich 0,85 realisiert wird.

In Übereinstimmung mit den obigen Ausführungen zu dem erfindungsgemäßen Verfahren werden die Gasströme in dem Brenner der erfindungsgemäßen Vorrichtung, d.h. das Verhältnis von Sauerstoff aus dem Brenner (inkl. Zentraldüsen-Feed-Sauerstoff) zu allen brennbaren Stoffen die dem Brenner aktiv (d.h. unter Druck) zugeführt werden, vorzugsweise so eingestellt, dass eine Luftzahl kleiner oder gleich 0,80 realisiert wird.

In Übereinstimmung mit den obigen Ausführungen zu dem erfindungsgemäßen Verfahren werden die Gasströme in dem Brenner der erfindungsgemäßen Vorrichtung, d.h. das Verhältnis von Sauerstoff aus dem Brenner (inkl. Zentraldüsen-Feed-Sauerstoff) zu allen brennbaren Stoffen die dem Brenner aktiv (d.h. unter Druck) zugeführt werden, vorzugsweise so eingestellt, dass eine Luftzahl kleiner oder gleich 0,78 realisiert wird.

In Übereinstimmung mit den obigen Ausführungen zu dem erfindungsgemäßen Verfahren werden die Gasströme in dem Brenner der erfindungsgemäßen Vorrichtung, d.h. das Verhältnis von Sauerstoff aus dem Brenner (inkl. Zentraldüsen-Feed-Sauerstoff) zu allen brennbaren Stoffen die dem Brenner aktiv (d.h. unter Druck) zugeführt werden, vorzugsweise so eingestellt, dass eine Luftzahl kleiner oder gleich 0,76 realisiert wird.

Die Luftzahl $\lambda$ ist definiert als das Verhältnis der tatsächlich zur Verfügung stehende Sauerstoffmenge zur mindestens notwendigen Sauerstoffmenge, die für eine stöchiometrisch vollständige Verbrennung theoretisch benötigt wird.

Der Brenner der erfindungsgemäßen Vorrichtung weist vorzugsweise einen konzentrischen Querschnitt auf, wobei im Inneren des konzentrischen Querschnitts der Einsatzmaterialdampf zusammen mit Sauerstoff als Feed-Mix in die Brennerflamme eingeführt wird und der Feed-Mix durch ein Trenngas von dem Sauerstoff-enthaltenden Brenngas getrennt ist.

Weitere gegenständliche Merkmale ergeben sich aus der vorstehenden Verfahrensbeschreibung.

Schließlich betrifft die vorliegende Erfindung noch die Verwendung dieser Vorrichtung zur Herstellung von synthetischem Quarzglas.

**Ausführungsbeispiel**

Flüssiges Einsatzmaterial OMCTS wird zusammen mit Stickstoff als Trägergas, welches auf 180 °C vorgewärmt wurde, in einem Verdampfer gemäß der Ausgestaltung der Internationalen Patentanmeldung PCT/EP2012/075346 bei 170 °C verdampft. Das Stickstoff-OMCTS-Dampfgemisch wird zusammen mit Sauerstoff ($O_2$-Mix) in einen konzentrischen Brenner eingeführt, wobei der Brenner unter den folgenden Bedingungen betrieben wird:

| | Versuch 1 | Versuch 2 | Versuch 3 |
|---|---|---|---|
| OMCTS (kg/h) | Konstant | Konstant | Konstant |
| $O_2$-Mix (sl/min) | Konstant | Konstant | Konstant |
| $O_2$-Brenn (sl/min) | Konstant | Konstant | Konstant |
| $H_2$ (sl/min) | Konstant | Konstant | Konstant |
| $N_2$ (sl/min) | Konstant | Konstant | Konstant |
| Luftzahl $\lambda$ | 0,78 | 0,78 | 0,78 |
| Abstand Brenner-Körper (mm) | 110,00 | 190,00 | 140,00 |
| Intensität (Cd/mm) | 1113911,72 | 602721,2691 | 1139597,015 |
| Erfindungsgemäßer Abstand | Nein | Nein | Ja |
| Effizienz | - | - | + |
| Bemerkung | Brenner wächst langsam mit $SiO_2$ Deposits zu und muss oft gewechselt werden (nicht produktionstauglich) | | Brenner wächst nicht zu, hohe Effizienz gewährleistet |

Maximale Intensität: 1162491,649

Bedeutung:

-: schlechte Abscheideeffizienz

+: verbesserte Abscheideeffizienz

In den Versuchen 1 und 2 befindet sich die Oberfläche des Sootkörpers in einem Brennerabstand außerhalb der erfindungsgemäßen Leuchtintensität der Flamme , während der Abstand zwischen Oberfläche des Sootkörpers und des Brenners im erfindungsgemäßen Versuch 3 zumindest für einen Zeitraum von 50 % der Aufbauzeit des Sootkörpers so ausgebildet ist, dass sich der Sootkörper in der Flamme im erfindungsgemäßen Bereich befindet.

In den vorbeschriebenen Versuchen wird ein konzentrischer Brenner verwendet, wobei durch die innere Düse das sogenannte Feedgemisch in den Brennerbereich eingeführt wird. Das Feedgemisch besteht aus der polymerisierbaren Polyalkylsiloxanverbindung OMCTS, einem $N_2$-Trägergas und einem $O_2$-Mix. Die innere Düse des Brenners wird durch eine mittlere, um die innere Düse konzentrisch angeordnete Düse, aus welcher $H_2$-Gas als Trenngas in den Brennerbereich einströmt. In der äußeren konzentrischen Düse wird der Sauerstoff als Brennmittel ($O_2$-Brenn) eingeführt.

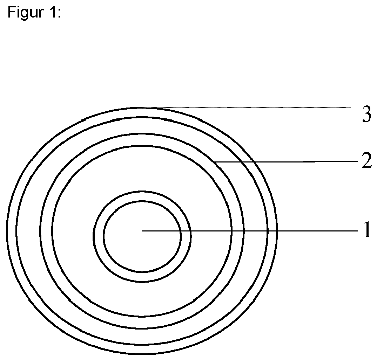

Die in diesem Ausführungsbeispiel verwendete Brennergeometrie ist in der Abbildung 1 dargestellt, in welcher

1:   die innere Düse;

2:   die mittlere Düse; und

3:   die äußere Düse

darstellen.

Die Kalibrierung der Lichtstärke von $SiO_2$-Syntheseflammen erfolgte in dem vorstehend Versuch wie folgt: Die Kalibrierung der Lichtstärke der Flamme wurde durch einen Vergleich mit einer kalibrierten Lichtquelle durchgeführt (LOT-Oriel K-150WH mit Gossen-Metrawatt Konstanter SLP120-80/snTD4541060001; erste Kalibrierung durch opto.cal SCS 053, Zertifikatsnummer 09333 am 4.11.2009; zweite Kalibrierung durch opto.cal SCS 053, Zertifikatsnummer 16428 am 9.12.2016).

Um die Empfindlichkeit der Kamera zu kalibrieren, wurde die Kalibrierlichtquelle in der typischen Entfernung montiert, in der die Messungen durchgeführt werden. Für den aktuellen Aufbau beträgt der Arbeitsabstand 450 mm. Aufgrund der perfekten Lambert'schen Emissionscharakteristik verhält sich die Lichtstärke in einer 1/r2 Weise, so dass in den Versuchen der Lichtstrom mit dem für die Kalibrierung durch opto.cal verwendeten Abstand für den Arbeitsabstand berechnet werden kann.

Im Kalibrierprotokoll ist die Beleuchtungsstärke der Zielkalibrierungsparameter. Für diese Kalibrierung ist die Leuchtdichte durch den Bezug zur Emissionsfläche besser geeignet. Deshalb wurde die Einheit der Beleuchtungsstärke [Ev] = lm/m2 = lx in die Einheit der Leuchtdichte [Lv] = cd/m$^2$ bzw. Cd/mm$^2$ umgerechnet.

Für Lambert'sche Strahler erfordert diese Umrechnung die zusätzliche Kenntnis der Abstände bei der Kalibrierung und Messung. Diese spezifische Lichtquelle hat eine Beleuchtungsstärke von Ev = 293,5 lx in 250 mm Entfernung, während die Lichtstärke lv = 90,59 Cd im Abstand von 450 mm beträgt; der Arbeitsabstand für die Versuche. Die Anwendung der Lichtintensität ist eine Einheit auf Detektorbasis, d.h. sie basiert auf der Detektorfläche und integriert die gesamte Lichtemission. Um eine emitterbasierte Messung zu ermöglichen, wird die effektive Emitterfläche einbezogen, so dass die resultierende Einheit die Leuchtdichte ist.

Die Anwendung photometrischer Einheiten (Lux/Lumen/Candela) nutzt die CIE-Leuchtdichtefunktion, um die spektrale Empfindlichkeit des menschlichen Auges nachzuahmen. Die Kalibrierlichtquelle und die Flammenemissionen weisen unterschiedliche spektrale Eigenschaften auf. Daher wird die CIE-Helligkeitsfunktion verwendet, um die wellenlängenabhängigen Emissionen zu gewichten und um photometrische Einheiten zu erhalten.

Die verwendete Kamera ist eine Basler acA1300-200um mit Basler C125-0818-5M-P f8mm. Die Kamera wurde einmal so eingestellt, dass sie technisch sinnvolle Messsignale liefert, und dann wurden die Brennweite, die Blende und die Position der Kamera zur Flamme fixiert und über die gesamten Messungen konstant gehalten.

Das spektral aufgelöste Emissionsspektrum der Kalibrierlichtquelle wird im Kalibrierprotokoll mit einer Wellenlängenauflösung von 2 nm von 280 nm bis 800 nm angegeben, was groß genug ist, um die gesamte CIE-Leuchtkraftfunktion abzudecken. Die Emissionen der Flamme wurden für verschiedene Bedingungen spektral aufgelöst.

Mit diesen Voraussetzungen ist es möglich, die Lichtstärke der Flamme gegen eine kalibrierte Lichtquelle zu messen, die auf das Schweizerische Metrologie-Institut rückführbar ist.

**Patentansprüche**

1. Verfahren zur Herstellung von synthetischem Quarzglas, **gekennzeichnet durch** die folgenden Verfahrensschritte:

   (1) Verdampfen eines Einsatzmaterials, das mindestens eine siliziumorganische Ausgangsverbindung enthält, unter Bildung eines Einsatzmaterialdampfes;
   (2) Zuführen des Einsatzmaterialdampfes aus Verfahrensschritt (1) zu einer Reaktionszone, in welcher der Einsatzmaterialdampf in Gegenwart von Sauerstoff in einer Flamme verbrannt wird und durch Oxidation und/oder durch Hydrolyse zu $SiO_2$-Sootteilchen umgesetzt wird;
   (3) Abscheiden der aus Verfahrensschritt (2) resultierenden $SiO_2$-Sootteilchen auf einer Ablagerungsfläche unter Ausbildung eines Sootkörpers; und
   (4) gegebenenfalls Trocknen und Verglasen der aus Verfahrensschritt (3) resultierenden $SiO_2$-Teilchen unter Bildung von synthetischem Quarzglas;

   **dadurch gekennzeichnet, dass**
   sich im Verfahrensschritt (3) die Ablagerungsfläche für die $SiO_2$-Sootteilchen für einen Zeitraum von mindestens 50 % der Aufbauzeit des Sootkörpers in einer Entfernung vom Brenner befindet, in welchem die horizontal über die gesamte Flamme integrierte Leuchtintensität der targetlosen Flamme, gemessen in Candela/mm noch mindestens 2/3 der maximalen horizontal integrierten Leuchtintensität der targetlosen Flamme im Maximum beträgt.

2. Verfahren nach Anspruch 1, **dadurch gekennzeichnet, dass** die im Verfahrensschritt (2) verwendeten aktiv zugeführten Brennergase zusammen eine Luftzahl kleiner oder gleich 1 aufweisen.

3. Verfahren nach Anspruch 1 oder 2, **dadurch gekennzeichnet, dass** die im Verfahrensschritt (2) verwendeten aktiv zugeführten Brennergase zusammen eine Luftzahl kleiner oder gleich 0,85 oder kleiner aufweisen.

4. Verfahren nach einem der Ansprüche 1 bis 3, **dadurch gekennzeichnet, dass** die im Verfahrensschritt (2) verwendeten aktiv zugeführten Brennergase zusammen eine Luftzahl kleiner oder gleich 0,76 oder kleiner aufweisen.

5. Verfahren nach einem der Ansprüche 1 bis 4, **dadurch gekennzeichnet, dass** der Verfahrensschritt (2) mittels eines Brenners mit einem konzentrischen Querschnitt durchgeführt wird, wobei im Inneren des konzentrischen Querschnitts der Einsatzmaterialdampf zusammen mit Sauerstoff als Feed-Mix in die Brennerflamme eingeführt wird und der Feed-Mix durch ein Trenngas von dem Sauerstoff-enthaltenden Brenngas getrennt ist.

6. Verfahren nach einem der Ansprüche 1 bis 5, **dadurch gekennzeichnet, dass** die siliziumorganische Ausgangsverbindung ausgewählt wird aus der Gruppe, bestehend aus Hexamethylcyclotrisiloxan (D3), Octamethylcyclotetrasiloxan (D4), Dekamethylcyclopentasiloxan (D5), Decamethylcyclohexasiloxan (D6), Tetradekamethylcycloheptasiloxan (D7), Hexadecamethylcyclooctasiloxan (D8), deren linearen Homologen und beliebigen Mischungen der vorgenannten Verbindungen.

7. Verfahren nach Anspruch 6, **dadurch gekennzeichnet, dass** die siliziumorganische Ausgangsverbindung Octamethylcyclotetrasiloxan (D4) ist.

8. Vorrichtung zur Herstellung von synthetischem Quarzglas, **dadurch gekennzeichnet, dass** die Vorrichtung umfasst:

   (a) mindestens eine Verdampferzone zum Verdampfen mindestens eines Einsatzmaterials, das mindestens eine siliziumorganische Ausgangsverbindung enthält, unter Bildung eines Einsatzmaterialdampfes;
   (b) mindestens eine Reaktionszone, in welche der Einsatzmaterialdampf aus der Verdampferzone (a) geführt wird und in welcher das Einsatzmaterial durch Pyrolyse oder durch Hydrolyse zu $SiO_2$-Teilchen umgesetzt wird, wobei die Reaktionszone einen Brenner mit einer Flamme umfasst; und
   (c) mindestens eine Abscheidezone mit einer Ablagerungszone für die aus der Reaktionszone (b) resultierenden $SiO_2$-Teilchen unter Bildung von synthetischem Quarzglas, wobei die Ablagerungszone einen Sootkörper umfasst,

   **dadurch gekennzeichnet, dass** der Abstand des Brenners aus der Reaktionszone (b) zu der Oberfläche des Sootkörpers aus der Abscheidezone (c) so eingestellt ist, dass die Oberfläche des Sootkörpers sich in einem Bereich der Flamme befindet, in welchem die horizontal (über die gesamte Flammenbreite in einer bestimmten Höhe) integrierte Leuchtintensität der targetlosen Flamme noch mindestens 2/3 der maximalen horizontal integrierten Leuchtintensität der targetlosen Flamme beträgt

9. Vorrichtung nach Anspruch 8, **dadurch gekennzeichnet, dass** die Vorrichtung einen Brenner umfasst, der mit einer Luftzahl kleiner oder gleich 1 betrieben wird.

10. Vorrichtung nach Anspruch 8 oder 9, **dadurch gekennzeichnet, dass** die Vorrichtung einen Brenner umfasst, der mit einer Luftzahl kleiner oder gleich 0,85 betrieben wird.

11. Vorrichtung nach einem der Ansprüche 8 bis 10, **dadurch gekennzeichnet, dass** die Vorrichtung einen Brenner umfasst, der mit einer Luftzahl kleiner oder gleich 0,76 betrieben wird.

12. Vorrichtung nach einem der Ansprüche 8 bis 11, **dadurch gekennzeichnet, dass** der Brenner einen konzentrischen Querschnitt aufweist, wobei im Inneren des konzentrischen Querschnitts der Einsatzmaterialdampf zusammen mit Sauerstoff als Feed-Mix in die Brennerflamme eingeführt wird und der Feed-Mix durch ein Trenngas von dem Sauerstoff-enthaltenden Brenngas getrennt ist.

13. Verwendung einer Vorrichtung gemäß einem der Ansprüche 8 bis 12 zur Herstellung von synthetischem Quarzglas.

Figur 1:

**Europäisches Patentamt**

**European Patent Office**

**Office européen des brevets**

## EUROPÄISCHER RECHERCHENBERICHT

Nummer der Anmeldung

EP 20 21 4478

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2011 121153 B3 (HERAEUS QUARZGLAS [DE]) 21. März 2013 (2013-03-21) | 8-11,13 | INV. C03B19/14 C03B20/00 |
| A | * Absatz [0051]; Ansprüche 1,2,10; Abbildung 1; Tabelle 1 * ----- | 1-7 | |
| X | EP 3 549 921 A1 (SHINETSU CHEMICAL CO [JP]) 9. Oktober 2019 (2019-10-09) | 8-13 | |
| A | * Absatz [0029] * ----- | 1-7 | |

RECHERCHIERTE SACHGEBIETE (IPC)

C03B

Der vorliegende Recherchenbericht wurde für alle Patentansprüche erstellt

| Recherchenort | Abschlußdatum der Recherche | Prüfer |
|---|---|---|
| Den Haag | 10. Mai 2021 | Creux, Sophie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 4478

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2021

| Im Recherchenbericht angeführtes Patentdokument | Datum der Veröffentlichung | Mitglied(er) der Patentfamilie | | Datum der Veröffentlichung |
|---|---|---|---|---|
| DE 102011121153 B3 | 21-03-2013 | CN | 103987670 A | 13-08-2014 |
| | | DE | 102011121153 B3 | 21-03-2013 |
| | | EP | 2791070 A1 | 22-10-2014 |
| | | JP | 6058693 B2 | 11-01-2017 |
| | | JP | 2015505809 A | 26-02-2015 |
| | | KR | 20140095560 A | 01-08-2014 |
| | | US | 2014349830 A1 | 27-11-2014 |
| | | WO | 2013087678 A1 | 20-06-2013 |
| EP 3549921 A1 | 09-10-2019 | CN | 110342807 A | 18-10-2019 |
| | | EP | 3549921 A1 | 09-10-2019 |
| | | JP | 6793676 B2 | 02-12-2020 |
| | | JP | 2019182668 A | 24-10-2019 |
| | | US | 2019300419 A1 | 03-10-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9010596 A
- DE 10102611 A
- DE 10225106 A
- US 2004182114 A
- DE 102011121153 A
- WO 2013087751 A
- WO 2014187513 A
- DE 102013209673
- US 8230701 B
- EP 2012075346 W